(19) Europäisches Patentamt
European Patent Office
Office européen des brevets

(11) EP 2 712 680 B1

(12) **EUROPÄISCHE PATENTSCHRIFT**

(45) Veröffentlichungstag und Bekanntmachung des Hinweises auf die Patenterteilung:
**12.08.2015 Patentblatt 2015/33**

(21) Anmeldenummer: **12405107.9**

(22) Anmeldetag: **27.09.2012**

(51) Int Cl.:
*B05B 5/00* *(2006.01)*    *G05B 19/4093* *(2006.01)*
*B05B 5/08* *(2006.01)*    *B05B 12/12* *(2006.01)*
*B05B 13/02* *(2006.01)*    *B05B 13/04* *(2006.01)*

(54) **Verfahren zur Beschichtung eines Werkstücks mit Pulver mittels einer Pulversprühpistole und Pulverbeschichtungsanlage**

Method for coating a workpiece by means of a powder spray gun and powder coating assembly

Procédé de revêtement d'une pièce à usiner avec de la poudre au moyen d'un pistolet de pulvérisation de poudre et installation de revêtement de poudre

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.04.2014 Patentblatt 2014/14**

(73) Patentinhaber: **J. Wagner AG**
**9450 Altstätten (CH)**

(72) Erfinder: **Keller, Wolfgang**
**88639 Ruhestetten (DE)**

(74) Vertreter: **Nückel, Thomas**
**Weinberglistrasse 4**
**6005 Luzern (CH)**

(56) Entgegenhaltungen:
**DE-T2- 69 535 077**

## Beschreibung

### Technisches Gebiet

Die Erfindung betrifft ein Verfahren und eine Vorrichtung zum Beschichten eines Werkstücks mit Pulverlack. Dabei handelt es sich um eine elektrostatische Pulverbeschichtung, bei der das zu beschichtende Werkstück mit einer Schicht elektrostatisch aufgeladenem Pulver überzogen wird. In einem sich daran anschließenden Arbeitsgang wird das mit dem Pulver beschichtete Werkstück erwärmt, sodass sich das Pulver auf der Oberfläche des Werkstücks verflüssigt, anschliessend aushärtet und eine geschlossene Schicht bildet.

### Stand der Technik

Um verschieden geformte Werkstücke, die in beliebiger Reihenfolge zur Beschichtungsanlage gelangen, automatisch, das heisst nicht manuell, beschichten zu können, wird vorgeschlagen, dass die Geometrie der Werkstücke vor der Beschichtung ermittelt wird und dann die Beschichtungsparameter entsprechend eingestellt werden. Dadurch wird die Beschichtungsanlage flexibler einsetzbar.

Aus dem Stand der Technik DE 695 35 077 T2 ist ein solches Verfahren für die Pulverbeschichtung bekannt. Um die Geometrie des zu beschichtenden Werkstücks zu ermitteln, wird das Werkstück in mehrere Identifikationsabschnitte aufgeteilt. Jeder dieser Identifikationsabschnitte wird dann separat ausgewertet und jedem der ausgewerteten Identifikationsabschnitte eine Teilidentifikationskennung zugeordnet und diese dann gespeichert. Im Speicher ist zusätzlich eine Abbildungstabelle vorhanden, die für jede Sprühpistole eine Pistolenabbildungstabelle enthält, welche jede Teilidentifikationskennung mit dem Parametersatz für die jeweilige Sprühpistole korreliert. Dieses Verfahren muss komplexe arithmetische Operationen durchführen und komplexe Datenstrukturen handhaben, was das Verfahren aufwändig macht und eine erhebliche Rechenleistung erfordert. Zudem arbeitet das System mit Redundanzen, was zwar die Ausfallsicherheit erhöht, aber auch teuer ist.

### Darstellung der Erfindung

Eine Aufgabe der Erfindung ist es ein Verfahren zur Beschichtung eines Werkstücks mit Pulver mittels einer Pulversprühpistole anzugeben, das automatisch die Geometrie des zu beschichtenden Werkstücks ermittelt und die für die Beschichtung erforderlichen Beschichtungsparameter automatisch festlegt.

Vorteilhafter Weise ist das erfindungsgemässe Verfahren auch bei einer bereits bestehenden Pulverbeschichtungsanlage einfach und kostengünstig zu implementieren. Eine bestehende Anlage kann also problemlos nachgerüstet werden. In der Regel müssen keine oder nur wenige Komponenten ausgewechselt werden.

Die Aufgabe wird durch ein Verfahren zur Beschichtung eines Werkstücks mit Pulver mittels einer Pulversprühvorrichtung mit den in Patentanspruch 1 angegebenen Merkmalen gelöst.

Bei dem erfindungsgemässen Verfahren zur Beschichtung eines Werkstücks mit Pulver mittels einer Pulversprühvorrichtung, werden die Tiefe des Werkstücks und die Breite des Werkstücks erfasst. Zudem werden eventuell vorhandene Vertiefungen im Werkstück erfasst. Mittels einer Steuereinheit werden anhand der Breite, der Tiefe und der Vertiefungen Beschichtungsparameter für die Pulversprühvorrichtung bestimmt. Das Werkstück wird dann mit den dafür ermittelten Beschichtungsparametern beschichtet.

Die Aufgabe wird zudem durch eine Pulverbeschichtungsanlage mit den in Patentanspruch 12 angegebenen Merkmalen gelöst.

Die erfindungsgemässe Pulverbeschichtungsanlage, die mit dem oben beschriebenen Verfahren betreibbar ist, umfasst eine optische Erfassungseinrichtung für die Tiefe und die Breite des Werkstücks, eine Recheneinheit und eine Pulversprühvorrichtung.

Vorteilhafte Weiterbildungen der Erfindung ergeben sich aus den in den abhängigen Patentansprüchen angegebenen Merkmalen.

Bei einer Weiterbildung des erfindungsgemässen Verfahrens sind die Beschichtungsparameter die Hochspannung und/oder der Sprühstrom und/oder die Zerstäuberluft und/oder die Pulvermenge und/oder die Triggerung der Pulversprühvorrichtung und/oder die Förderluft und/oder die Dosierluft und/oder der Abstand zwischen dem Werkstück und der Pulversprühvorrichtung und/oder die vertikale Position der Pulversprühvorrichtung und/oder die Sichtseite des Werkstücks und/oder die Rückseite des Werkstücks und/oder die Pulverart und/oder die Leitfähigkeit des Werkstücks und/oder die Transportgeschwindigkeit des Werkstücks und/oder ob das Werkstück vorbeschichtet ist.

Bei einer anderen Weiterbildung des erfindungsgemässen Verfahrens wird die erfasste Tiefe des Werkstücks einer von mehreren Klassen für die Tiefe zugeordnet.

Bei einer Ausführungsform des erfindungsgemässen Verfahrens wird die erfasste Breite des Werkstücks einer von mehreren Klassen für die Breite zugeordnet.

Bei einer anderen Ausführungsform des erfindungsgemässen Verfahrens wird die Vertiefung des Werkstücks einer von mehreren Klassen für die Vertiefung zugeordnet.

Zudem kann bei dem erfindungsgemässen Verfahren als Pulversprühpistole eine automatische Pulversprühpistole benutzt werden.

Bei dem erfindungsgemässen Verfahren können die Tiefe, die Breite und die Vertiefungen mit einem optischen Sensor erfasst werden.

Darüber hinaus kann bei dem erfindungsgemässen Verfahren vorgesehen sein, dass auch die Position des Werkstückes erfasst wird.

Zudem ist es von Vorteil mit Hilfe eines Inkrementalgebers die Breite des Werkstückes zu ermitteln. Anhand der vom Inkrementalgeber gelieferten Inkremente, die zwischen einem Start- und einem Endimpuls liegen, wird auf einfache Weise die Breite des Werkstücks errechnet.

Vorteilhafterweise wird bei dem erfindungsgemässen Verfahren aus der Klasse für die Breite und/oder der Klasse für die Tiefe und/oder der Klasse für die Vertiefungen automatisch eine Programmnummer erstellt.

Bei dem erfindungsgemässen Verfahren kann vorgesehen sein, dass anhand der Programmnummer die Beschichtungsparameter für die Pulversprühpistole und/oder die Pulverpumpe bestimmt werden.

Zudem kann bei dem erfindungsgemässen Verfahren vorgesehen sein, dass die Vertiefungen auf der Vorderseite und auf der Rückseite des Werkstückes erfasst werden.

Bei einer Weiterbildung der Pulverbeschichtungsanlage ist der eine Transporteinrichtung für das Werkstück vorgesehen, wobei die Erfassungseinrichtung für die Tiefe derart angeordnet und betreibbar ist, dass es die Tiefe des Werkstücks in der Nähe der Transporteinrichtung erfasst.

Bei einer anderen Weiterbildung der Pulverbeschichtungsanlage ist ein Inkrement-Encoder vorgesehen, um die Position des Werkstückes zu erfassen.

Bei einer Ausführungsform der Pulverbeschichtungsanlage ist die Erfassungseinrichtung für die Tiefe ein optischer Sensor, ein Laser-Taster, ein Linienscanner, ein Drehstahlscanner oder eine Kamera.

## Kurze Beschreibung der Zeichnungen

Im Folgenden wird die Erfindung anhand von 5 Figuren weiter erläutert.

Figur 1    zeigt eine mögliche Ausführungsform der Pulverbeschichtungsanlage in einer dreidimensionalen Ansicht.

Figur 2    zeigt die Pulverbeschichtungsanlage in einer Prinzipdarstellung.

Figur 3    zeigt einen möglichen Ablauf des erfindungsgemässen Verfahrens in einem Flussdiagramm.

Figur 4    zeigt die Sensoranordnung der Pulverbeschichtungsanlage zusammen mit einem ersten zu vermessenden Werkstück in der Draufsicht.

Figur 5    zeigt die Sensoranordnung zusammen mit einem zweiten zu vermessenden Werkstück in der Draufsicht.

Figur 6    zeigt die Sensoranordnung zusammen mit einem dritten zu vermessenden Werkstück in der Draufsicht.

## Wege zur Ausführung der Erfindung

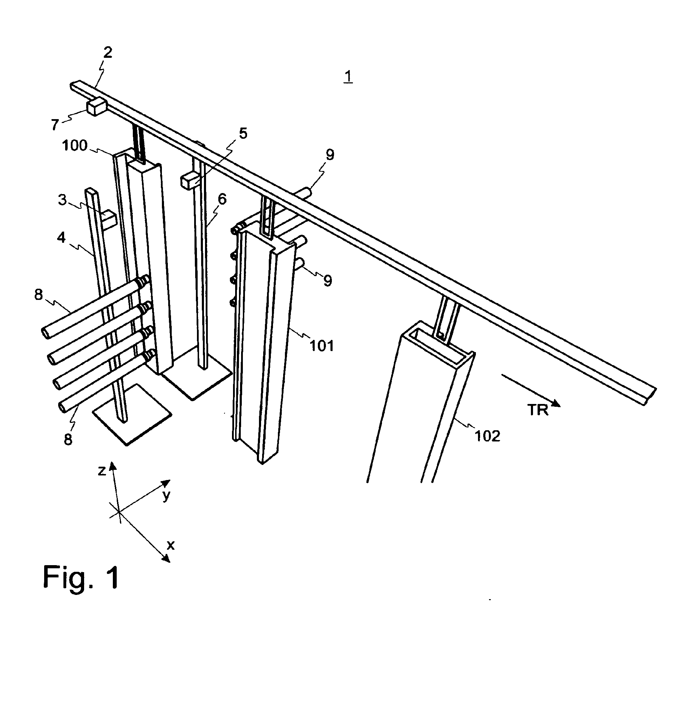

In Figur 1 ist eine mögliche Ausführungsform der Pulverbeschichtungsanlage 1 in einer dreidimensionalen Ansicht dargestellt. Um das Verständnis der Erfindung zu erleichtern, sind die Komponenten vereinfacht dargestellt.

Die zu beschichtenden Werkstücke 100, 101, 102 hängen an einer Transporteinrichtung 2 und werden in Transportrichtung TR transportiert.

Die Pulverbeschichtungsanlage 1, die im Folgenden auch kurzum als Beschichtungsanlage bezeichnet wird, umfasst eine Erfassungseinrichtung mit der die Geometrie und die Position des zu beschichtenden Werkstücks 100 ermittelt wird. Sobald das zu beschichtende Werkstück 100 die Erfassungseinrichtung passiert, wird dessen Breite und dessen Tiefe ermittelt. Die Erfassungseinrichtung weist dazu einen Sensor 3 auf, der an einer Halterung 4 montiert ist und die Geometrie der Vorderseite des Werkstücks 100 erfasst. Die Erfassungseinrichtung weist zudem einen Sensor 5 auf, der an einer Halterung 6 montiert ist und die Geometrie der Rückseite des Werkstücks 100 erfasst.

Der Bereich der Beschichtungsanlage 1, in dem die automatische Beschichtung erfolgt, wird auch als Beschichtungsstation bezeichnet. Dort befindet sich eine Pulversprühvorrichtung oder kurz Sprühvorrichtung mit einer oder mehreren parallel nebeneinander angeordneten Pulversprühpistolen 8 bzw. 9. Diese können an zwei in Figur 1 nicht gezeigten Führungsarmen befestigt sein. Die beiden Führungsarme sind so ausgebildet, dass die Pulversprühpistolen 8 bzw. 9 sowohl in vertikaler Richtung, welche im Folgenden auch als z-Richtung bezeichnet wird, als auch in horizontaler Richtung quer zur Transportrichtung TR des Werkstücks 100, welche im Folgenden auch als y-Richtung bezeichnet wird, bewegbar sind.

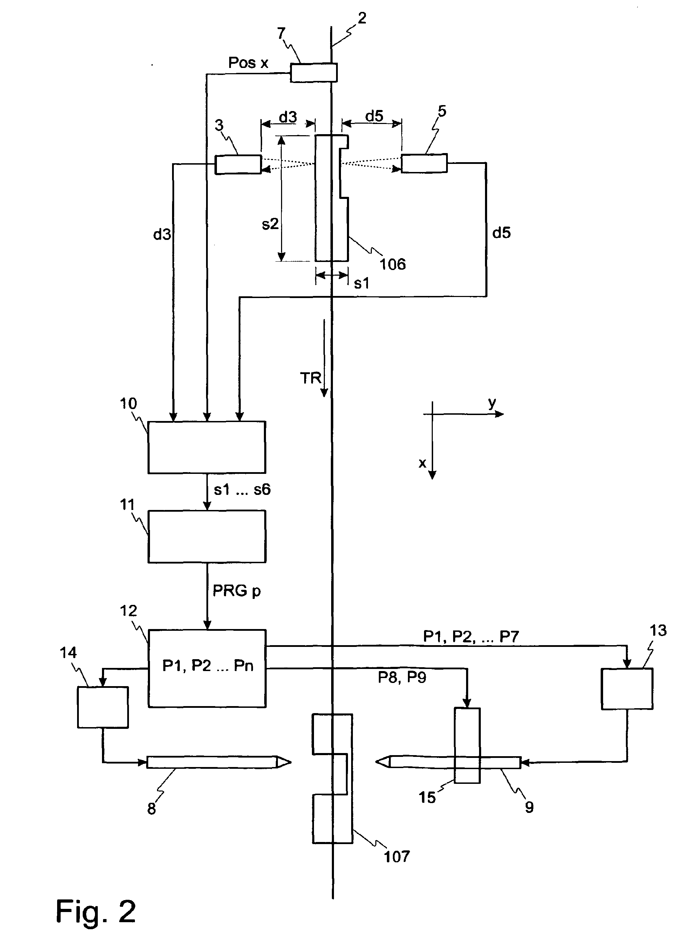

Die Pulversprühpistolen 8 und 9 können ein- oder mehrreihig angeordnet sein. Es können beispielsweise jeweils fünf Pulversprühpistolen in zwei Reihen auf der einen Seite der Beschichtungsstation und jeweils fünf Pulversprühpistolen in zwei Reihen auf der anderen Seite der Beschichtungsstation angeordnet sein. In Figur 1 sind vier Pulversprühpistolen 8 und vier Pulversprühpistolen 9 jeweils einreihig angeordnet. Bei Bedarf können die Pulversprühpistolen 8 und 9 auch an einem Linearhubgerät 15 (in Figur 2 schematisch dargestellt) befestigt sein. Mit dem Linearhubgerät 15 können die Pulversprühpistolen vertikal und horizontal bewegt werden.

Die Pulverbeschichtungsanlage 1 kann neben den gezeigten Komponenten durchaus auch noch zusätzliche Komponenten aufweisen. So kann beispielsweise eine Beschichtungskabine vorgesehen sein, in der die Pulversprühpistolen 8 und 9 angeordnet sind oder in die die Pulversprühpistolen 8 und 9 hineinragen.

Der Teil des Pulvers, der nicht am zu beschichtenden Werkstück 100 haften bleibt, wird über einen ebenfalls nicht gezeigten Absaugkanal aus der Kabine abgesaugt und in einem Behälter gesammelt. Auch wenn für die Beschichtung der Werkstücke eine Kabine von Vorteil ist, so ist diese jedoch nicht zwingend erforderlich. Auch für die Absaugung des überschüssigen Pulvers ist grundsätzlich keine Kabine erforderlich. Das abgesaugte überschüssige Pulver kann erneut für die Beschichtung verwendet werden. Figur 2 zeigt die Pulverbeschichtungsanlage in einer Prinzipdarstellung.

Die Steuerung der gesamten Pulverbeschichtungsvorrichtung erfolgt über eine Steuereinheit 12. Die Steuerung der einzelnen Pistolen erfolgt jeweils über ein Steuergerät. Das Steuergerät regelt insbesondere die Spannung, den Strom und die Pulvermenge, die von der an das Steuergerät angeschlossenen Pistole versprüht wird. In Figur 2 ist beispielhaft gezeigt, dass die Pistole 9 über ein Steuergerät 13 und die Pistole 8 über ein Steuergerät 14 gesteuert wird.

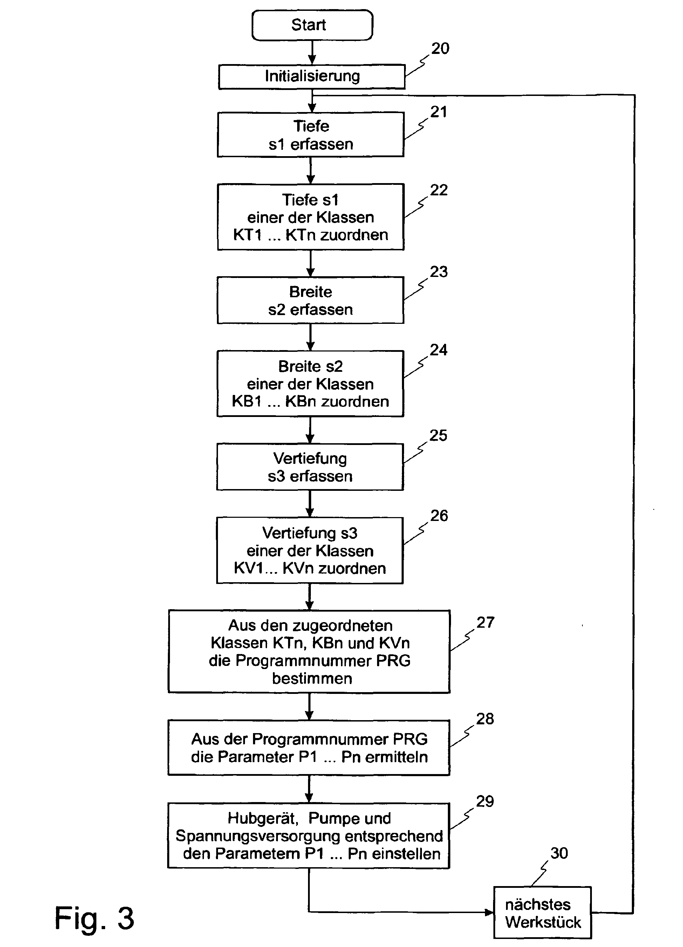

Figur 3 zeigt einen möglichen Ablauf des erfindungsgemässen Verfahrens in einem Flussdiagramm.

Die Erfassung der Tiefe, der Breite und der Vertiefungen sowie der Position des Werkstücks kann auf verschiedene Arten erfolgen. Im Folgenden wird dies anhand von drei Ausführungsformen beispielhaft erläutert.

Ausführungsform 1

Die beiden Sensoren 3 und 5 sind als optische Abstandssensoren ausgebildet und erfassen während der Zeitdauer T während der das Werkstück 100 an ihnen vorbei transportiert wird, zu verschiedenen Zeitpunkten t punktweise den Abstand d zum Werkstück 100. Auf diese Weise erzeugt jeder Sensor 3, 5 ein Abtastprofil A(t, d) mit einer Reihe von Messpunkten. Der Sensor 3 liefert als Abtastprofil A(t, d3) die Messpunkte

$$A(t, d3) = \{(t1, d31), (t2, d32), \ldots (tn, d3n)\}.$$

Der Sensor 5 liefert als Abtastprofil A(t, d5) die Messpunkte

$$A(t, d5) = \{(t1, d51), (t2, d52), \ldots (tn, d5n)\}.$$

Zusätzlich befindet sich oben in der Nähe der Transporteinrichtung 2 ein weiterer Sensor 7, der die Position x des Werkstücks 100 in Abhängigkeit von der Zeit ermittelt. Der Sensor 7 erzeugt somit die Messsignalreihe P(t, x) :

$$P(t, x) = \{(t1, x1), (t2, x2), \ldots (tn, xn)\}$$

Diese beiden Abtastprofile A(t, d3) und A(t, d5) werden einer Auswerteeinheit 10 (siehe Figur 2) zugeführt. Die Auswerteeinheit 10 erhält zusätzlich die Messsignalreihe P(t, x). Aus der Messreihe P(t, x) kann die Auswerteeinheit 10 die Gesamtbreite s2 des Werkstücks 100 ermitteln. Aus dem Abtastprofil A(t, d3) ermittelt die Auswerteeinheit 10 die Geometrie der Vorderseite des Werkstücks 100. Die Geometrie wird hier auch als Profil des Werkstücks bezeichnet. Aus dem Abtastprofil A(t, d5) ermittelt die Auswerteeinheit 10 die Geometrie der Rückseite des Werkstücks 100.

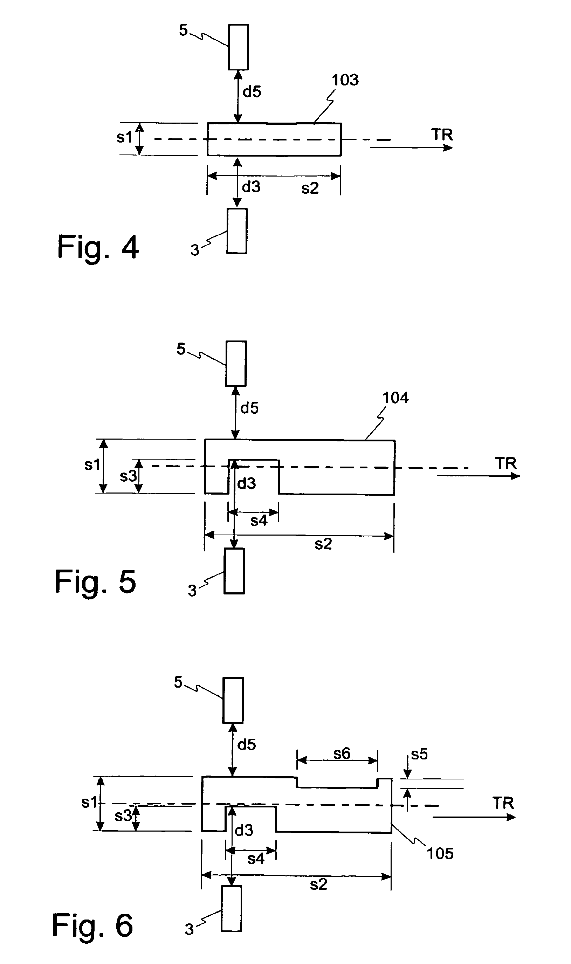

Im Folgenden wird die Bestimmung der Profile für die Vorder- und die Rückseite jener Werkstücke 103, 104 und 105 beispielhaft weiter erläutert, die in den Figuren 4, 5 und 6 dargestellt sind.

Das in Figur 4 in der Ansicht von oben gezeigte Werkstück 103 hat einen rechteckigen Querschnitt. Während das Werkstück 103 zwischen den beiden Sensoren 3 und 5 hindurch bewegt wird, messen diese, wie oben erwähnt, zu bestimmten Zeitpunkten t1 ... tn jeweils den Abstand d3 beziehungsweise d5 zum Werkstück 103. Aus den Abstandsmesswerten d31 ... d3n und d51 ... d5n kann die Auswerteeinheit 10 nun die Gesamttiefe s1 des Werkstücks 103 errechnen. Dies entspricht dem Schritt 21 im Flussdiagramm gemäss Figur 3.

Anschliessend wird im Schritt 22 die Gesamttiefe s1 einer von mehreren Klassen KT1 ... KTn für die Gesamttiefe zugeordnet. Jede der Klassen KT repräsentiert dabei einen Werteteilbereich. Sind beispielsweise drei Klassen KT1, KT2 und KT3 mit gleich grossen Werteteilbereichen vorgesehen, so wird die Gesamttiefe s1 der Klasse KT1 zugeordnet, wenn s1 zwischen 0 und 33% des Nennmasses liegt. Wenn die Gesamttiefe s1 zwischen 33% und 66% des Nennmasses liegt, wird die Gesamttiefe s1 der Klasse KT2 zugeordnet. Liegt s1 im Bereich zwischen 66% und 100% des Nennmasses, wird s1 der Klasse KT3 zugeordnet.

Als Nennmass wird jener Wert verstanden, der dem maximal möglichen, mit den Sensoren 3 und 5 erfassbaren Abstand entspricht. Das Nennmass hängt im Wesentlichen von den baulichen Gegebenheiten wie beispielsweise dem Abstand der beiden Sensoren 3 und 5 ab. Die Anzahl der definierbaren Klassen KT1 ... KTn hängt unter anderem von der gewünschten Erfassungsgenauigkeit ab und ist grundsätzlich frei bestimmbar. Auch die Aufteilung des Nennmassbereichs (0% bis 100% des Nennmasses) auf die Klassen KT1 bis KTn ist frei wählbar. Grundsätzlich braucht der Nennmassbereich nicht in n gleich grosse Teilbereiche aufgeteilt zu werden. Es ist beispielsweise auch möglich, den Nennmassbereich so aufzuteilen, dass bestimmte Klassen einen grösseren und andere wiederum einen kleineren Teilbereich des Nennmassbereichs repräsentieren.

Die Erfassung der Gesamtbreite s2 erfolgt im Schritt 23. Wie bei der Gesamttiefe s1 wird auch die Gesamtbreite s2 einer von mehreren Klassen KB1 ... KBn für die Gesamtbreite zugeordnet (Schritt 24). Die Zuordnung der Gesamtbreite s2 zu einer der Klassen KB1 ... KBn kann sinngemäss auf die oben beschriebene Art und Weise erfolgen. Die maximal mögliche erfassbare Breite wird als Nennbreitenmass definiert. Die Klassen KB1 ... KBn können beispielsweise wie folgt aufgeteilt werden.

    KB1: 0% bis 25% des Nennbreitenmasses
    KB2: 25% bis 50% des Nennbreitenmasses
    KB3: 50% bis 75% des Nennbreitenmasses
    KB4: 75% bis 100% des Nennbreitenmasses

Statt die Klassen KB1 bis KB4 mit Relativwerten (Prozentwerten) aufzuteilen, könnten die Klassen KB1 bis KB4 auch mit Absolutwerten, wie zum Beispiel mm oder Inkrementen aufgeteilt werden.

Die Gesamtbreite s2 wird nun jener Klasse KB1 ... KB4 zugeordnet, in dessen Wertebereich die Gesamtbreite s2 fällt.

Schliesslich werden auch für Vertiefungen wie zum Beispiel s3, s4 mehrere Klassen KV1 ... KVn definiert (Schritt 26 im Flussdiagramm). Werden dafür beispielsweise zwei Klassen KV1 und KV2 vorgesehen, können diese wie folgt definiert werden:

KV1:

$$0 \leq \frac{s3}{s4} \leq 2$$

KV2:

$$2 \leq \frac{s3}{s4} \leq 10$$

Da das Werkstück 103 weder auf der Vorder- noch auf der Rückseite Vertiefungen aufweist, ist das Mass s3 = 0, so dass das Werkstück 103 bezüglich der Vertiefungen der Klasse KV1 zugeordnet wird.

Für das Werkstück 103 ergibt sich beispielsweise die Zuordnung Z = (KT3, KB1, KV1). Die Klassen KT3, KB1 und KV1 bilden somit die Charakteristika für die Geometrie des Werkstücks 103.

Für jedes Werkstückprofil gibt es ein optimales Betriebsprogramm, das heisst einen optimalen Satz an Betriebsparametern P1 ... Pn, die im Folgenden auch als Beschichtungsparameter bezeichnet werden. Dazu gehören die vom Hochspannungsgenerator erzeugte Hochspannung P1 und der durch die Hochspannungselektrode fliessende Sprühstrom P2. Aber auch die Zerstäuberluft P3, die Pulvermenge P4 und die Triggerung der Pulversprühpistole P5, also das Ein- und Ausschalten des Pulverstroms, sind mögliche Beschichtungsparameter. Zudem sind die Förderluft P6, die Dosierluft P7 der Pulver-Injektoren 14 oder der Pulverpumpen, der Abstand P8 zwischen dem Werkstück 103 und der Pulversprühpistole 8 und die vertikale Position P9 der Pulversprühpistole 8 mögliche Beschichtungsparameter. Auch ob das Werkstück vorbeschichtet ist, kann ein Beschichtungsparameter sein. Weitere Beschichtungsparameter können sein ob es sich um die Sichtseite des Werkstücks handelt und/oder ob es sich um die Rückseite des Werkstücks handelt. Darüber hinaus kann auch die Pulverart einen Beschichtungsparameter darstellen. Hierbei kann die Pulverart beispielsweise in verschiedene Klassen eingeteilt werden, wie:

- Organische und anorganische Pulver,
- Metallic- und nicht Metallicpulver,
- Strukturbildendes oder glatt verlaufendes Pulver,
- Farbklasse oder Deckungskraft des Pulvers,
- Dielektrizitätsklasse des Pulvers,
- Spezifisches Gewicht des Pulvers,
- einfach handhabbares oder komplexes Pulver.

Auch die Leitfähigkeit des Werkstücks und/oder die Transportgeschwindigkeit des Werkstücks können Beschichtungsparameter sein. Diese Aufzählung ist lediglich eine Auswahl und keine abschliessende Aufzählung der Betriebsparameter.

Bevor die Beschichtungsanlage mit der automatischen Beschichtung der Werkstücke beginnt, kann die Ermittlung der für ein bestimmtes Werkstück optimalen Betriebsparameter P1 ... Pn beispielsweise durch eine Reihe von Versuchen herausgefunden werden. Diese Phase ist eine Art Lernphase. Hat man für eine bestimmte Werkstückgeometrie die optimalen Betriebsparameter P1 ... Pn gefunden, werden diese zusammen mit den Charakteristika der Werkstückgeometrie KT, KB und KV abgespeichert und ihnen eine eindeutige Programmnummer PRG zugeordnet. Führt man dies für verschiedene Werkstücke durch, kann daraus beispielsweise die folgende Tabelle entstehen:

| Werkstück | Werkstückcharakteristika | Programm-Nr Vorderseite | Programm-Nr Rückseite |
|---|---|---|---|
| 130 | KT1, KB1, KV1, KV2 | 111 | 112 |
| 164 | KT1, KB1, KV2, KV1 | 112 | 111 |
| 201 | KT3, KB2, KV1, KV1 | 321 | 321 |
| usw. | | | |

Somit kann anhand der Tabelle für die verschiedensten Werkstückprofile jeweils die entsprechende Programmnummer und damit der Satz mit den optimalen Betriebsparametern P1 ... Pn ausgewählt werden.

Im Folgenden wird die Bestimmung der Programmnummer PRG anhand von drei Beispielen mit drei verschiedenen Werkstücken 103 (siehe Figur 4), 104 (siehe Figur 5) und 105 (siehe Figur 6) beschrieben. Die Nenntiefe wird hier auf 500 mm und die Nennbreite zu 1000 mm gesetzt und die Klassen KT, KB und KV werden folgendermassen aufgeteilt:

| | | |
|---|---|---|
| KT1: | 0% bis 25% der Nenntiefe | 0 - 125 mm |
| KT2: | 25% bis 50% der Nenntiefe | 125 - 250 mm |
| KT3: | 50% bis 75% der Nenntiefe | 250 - 375 mm |
| KT4: | 75% bis 100% der Nenntiefe | 375 - 500 mm |
| | | |
| KB1: | 0% bis 20% des Nennbreite | 0 - 200 mm |
| KB2: | 20% bis 40% des Nennbreite | 200 - 400 mm |
| KB3: | 40% bis 60% des Nennbreite | 400 - 600 mm |
| KB4: | 60% bis 80% des Nennbreite | 600 - 800 mm |
| KB5: | 80% bis 100% des Nennbreite | 800 - 1000 mm |

KV1:

$$0 \leq \frac{s3}{s4} \leq 0,5$$

KV2:

$$0,5 \leq \frac{s3}{s4} \leq 1$$

KV2:

$$1 \leq \frac{s3}{s4} \leq 10$$

Diese Initialisierung erfolgt im Flussdiagramm in Figur 3 im Schritt 20.

Bei der Erfassung der Tiefe, der Breite und der Vertiefungen des in Figur 4 gezeigten Werkstücks 104 wird sinngemäss wie oben beschrieben vorgegangen. Das in Figur 4 in der Ansicht von oben gezeigte Werkstück 103 hat einen rechteckigen Querschnitt und keine Vertiefung. Während das Werkstück 103 zwischen den beiden Sensoren 3 und 5 hindurch bewegt wird, messen diese zu bestimmten Zeitpunkten t1 ... tn jeweils den Abstand d3 beziehungsweise d5 zum Werkstück 103. Anschliessend werden in der Auswerteeinheit 10 die Masse für die Gesamttiefe s1, die Gesamtbreite s2 und die Vertiefung s3, s4 ermittelt. Für das gezeigte Werkstück 103 werden mit der Auswerteeinheit 10 in den Schritten 20, 23 und 25 folgende Masse ermittelt:

s1 = 90 mm
s2 = 340 mm
s3 = 0 mm
s4 = 0 mm
s5 = 0 mm
s6 = 0 mm

Die Programmauswahleinheit 11 bestimmt aus den Massen s1 ... s6 die Charakteristika KT, KB und KV für die Geometrie des Werkstücks 103 zu:

| | | |
|---|---|---|
| s1 = 90 mm | | KT1 |
| s2 = 340 mm | | KB2 |
| s3 = 0 mm | s3/s4 = 0 | KV1 |
| s4 = 0 mm | | |
| s5 = 0 mm | s5/s6 = 0 | KV1 |
| s6 = 0 mm | | |

Die Steuereinheit 12 ermittelt aus diesen Charakteristika die Programmnummer PRG121 für die Vorderseite und die Programmnummer PRG121 für die Rückseite (Schritt 27) und stellt die Beschichtungsparameter P1 ... P9 für das Werkstück 103 entsprechend ein (Schritt 28).

Das in Figur 5 in der Ansicht von oben gezeigte Werkstück 104 hat einen rechteckigen Querschnitt und eine Vertiefung auf der Vorderseite (der dem Sensor 3 zugewandten Seite). Während das Werkstück 104 zwischen den beiden Sensoren 3 und 5 hindurch bewegt wird, messen diese zu bestimmten Zeitpunkten t1 ... tn jeweils den Abstand d3 beziehungsweise d5 zum Werkstück 104. Anschliessend werden in der Auswerteeinheit 10 die Masse für die Gesamttiefe s1, die Gesamtbreite s2 und die Vertiefung s3, s4 ermittelt. Für das gezeigte Werkstück 104 werden folgende Masse ermittelt:

s1 = 150 mm
s2 = 480 mm
s3 = 90 mm
s4 = 130 mm
s5 = 0 mm
s6 = 0 mm

Die Programmauswahleinheit 11 bestimmt aus diesen Massen s1 ... s4 die Charakteristika KT, KB und KV für die Geometrie des Werkstücks 104 zu:

| | |
|---|---|
| s1 = 150 mm | KT2 |
| s2 = 480 mm | KB3 |

(fortgesetzt)

| | | |
|---|---|---|
| s3 = 90 mm | s3/s4 = 90/130 | KV2 |
| s4 = 130 mm | | |
| s5 = 0 mm | s5/s6 = 0 | KV1 |
| s6 = 0 mm | | |

Die Steuereinheit 12 ermittelt aus diesen Charakteristika die Programmnummer PRG232 für die Vorderseite und die Programmnummer PRG231 für die Rückseite und stellt die Beschichtungsparameter P1 ... P9 für das Werkstück 104 entsprechend ein.

Das in Figur 6 in der Ansicht von oben gezeigte Werkstück 105 hat einen rechteckigen Querschnitt und eine Vertiefung auf der Vorderseite (der dem Sensor 3 zugewandten Seite) und eine Vertiefung auf der Rückseite. Während das Werkstück 104 zwischen den beiden Sensoren 3 und 5 hindurch bewegt wird, messen diese zu bestimmten Zeitpunkten t1 ... tn jeweils den Abstand d3 beziehungsweise d5 zum Werkstück 105. Anschliessend werden in der Auswerteeinheit 10 die Masse für die Gesamttiefe s1, die Gesamtbreite s2 und die Vertiefung s3, s4 ermittelt. Für das gezeigte Werkstück 104 werden folgende Masse ermittelt:

s1 = 140 mm
s2 = 480 mm
s3 = 60 mm
s4 = 130 mm
s5 = 20 mm
s6 = 210 mm

Die Programmauswahleinheit 11 bestimmt aus diesen Massen s1 ... s4 die Charakteristika KT, KB und KV für die Geometrie des Werkstücks 105 zu:

| | | |
|---|---|---|
| s1 = 150 mm | | KT2 |
| s2 = 480 mm | | KB3 |
| s3 = 90 mm | s3/s4 = 90/130 | KV2 |
| s4 = 130 mm | | |
| s5 = 20 mm | s3/s4 = 20/210 | KV1 |
| s6 = 210 mm | | |

Die Steuereinheit 12 ermittelt aus diesen Charakteristika die Programmnummer PRG232 für die Vorderseite und die Programmnummer PRG231 für die Rückseite und stellt die Beschichtungsparameter P1 ... P9 für das Werkstück 105 entsprechend ein.

Sobald das Werkstück den Beschichtungsbereich erreicht, veranlasst die Steuereinheit 12, dass die zu dem Werkstück passenden Beschichtungsparameter P1 ... P9 eingestellt werden und das Werkstück optimal beschichtet wird.

Mit dem erfindungsgemässen Verfahren können die verschiedensten Werkstückprofile automatisch erfasst und die dafür optimalen Beschichtungsparameter ermittelt werden.

Die in den Figuren dargestellten Werkstückprofile sind lediglich Beispiele. Das Werkstück kann auf der Vorderseite und der Rückseite auch mehr als jeweils eine Vertiefung aufweisen. Mit dem erfindungsgemässen Verfahren lassen sich annähernd beliebig viele Vertiefungen im Werkstück vermessen. Die Anzahl der erfassten Vertiefungen ist ein Mass für die Komplexität des Werkstücks und kann als weiterer Beschichtungsparameter bei der Auswahl der geeigneten Programmnummer berücksichtigt werden. Wenn beispielsweise weniger als fünf Vertiefungen auf einer Seite des Werkstücks ermittelt werden, kann das Werkstück als wenig komplex eingestuft werden. Werden fünf oder mehr Vertiefungen auf einer Seite des Werkstücks ermittelt, kann das Werkstück als komplex eingestuft werden.

Die Erfassung des Werkstückprofils kann unmittelbar vor der Beschichtungsstation oder auch weit davor erfolgen. Erfolgt die Erfassung des Werkstückprofils weit vor Beschichtungsstation, wird unter anderem auch sichergestellt, dass die Sensoren nicht durch das überschüssige Pulver verschmutzen. Die Reihenfolge in der die verschiedenen Werkstücke zur Beschichtungsstation gelangen, spielt keine Rolle. Die Steuereinheit 12 merkt sich die Reihenfolge, in der die Werkstücke erfasst wurden und kann dies dann beim Beschichten berücksichtigen.

Ausführungsform 2

Die Erfassung der Breite, der Tiefe und der Vertiefungen kann auch auf die folgende Art und Weise erfolgen.

Die beiden Sensoren 3 und 5 sind als optische Zeilenscanner ausgebildet und erfassen während der Zeitdauer T, während der das Werkstück 100 an ihnen vorbei transportiert wird, nicht nur punktweise sondern zeilenweise das Werkstück 100. Auf diese Weise entsteht zum Zeitpunkt t1 der Abtastung das gesamte Abtastprofil A(t1, d) des Werkstücks. Der Sensor 3 liefert als Abtastprofil A(t1, d3) die Messpunkte

$$A(t1, d3) = \{(t1, d31), (t1, d32), \ldots (t1, d3n)\}.$$

Der Sensor 5 liefert als Abtastprofil A(t1, d5) die Messpunkte

$$A(t1, d5) = \{(t1, d51), (t1, d52), \ldots (t1, d5n)\}.$$

Diese beiden Abtastprofile A(t1, d3) und A(t1, d5) werden der Auswerteeinheit 10 zugeführt. Im Unterschied zur ersten Ausführungsform ist hier kein separater Sensor 7 zur Erfassung der Werkstückbreite vorhanden. Aus der Messreihe A(t1, d3) kann die Auswerteeinheit 10 sowohl die Gesamttiefe s1 als auch die Gesamtbreite s2 des Werkstücks 100 ermitteln. Aus dem Abtastprofil A(t1, d3) ermittelt die Auswerteeinheit 10 zusätzlich die Geometrie der Vorderseite des Werkstücks 100. Aus dem Abtastprofil A(t1, d5) ermittelt die Auswerteeinheit 10 die Geometrie der Rückseite des Werkstücks 100.

Die Zuordnung der Masse zu den jeweiligen Klassen KT, KB und KV und die Bestimmung der Programmnummer PRG erfolgt vorteilhafter Weise auf die oben unter Ausführungsform 1 beschriebene Weise.

Ausführungsform 3

Hierbei wird die Breite des Werkstücks mit einem Inkrementalgeber ermittelt. Dazu kann der Sensor 7 als Inkrementalgeber ausgebildet sein. Sobald sich die Transporteinrichtung bewegt, erzeugt der Inkrementalgeber Impulse oder Inkremente. Wenn das an der Transporteinrichtung 2 hängende Werkstück 100 den Sensor 3 passiert, wird ein Startimpuls ausgelöst, der das vordere Ende des Werkstücks signalisiert. Wenn das hintere Ende des Werkstücks den Sensor 3 passiert, wird ein Endimpuls ausgelöst, der das hintere Ende des Werkstücks signalisiert. Anhand der Anzahl der vom Inkrementalgeber gelieferten Inkremente, die zwischen einem Start- und einem Endimpuls liegen, kann auf einfache Weise die Breite des Werkstücks errechnet werden. Unter Umständen kann sogar die Anzahl der zwischen dem Start- und dem Endimpuls auftretenden Inkremente genügen, um daraus auf die Breite des Werkstücks zu schliessen. In diesem Fall hat das Werkstück dann eine Breite, die der Anzahl der zwischen dem Start- und dem Endimpuls auftretenden Inkremente entspricht. Das Mass für die Werkstückbreite ist dann die Anzahl der Inkremente.

Die Erfassung der Tiefe und der Vertiefungen des Werkstücks kann auf die oben unter Ausführungsform 1 oder 2 beschriebenen Art erfolgen.

Die Zuordnung der Masse zu den jeweiligen Klassen KT, KB und KV und die Bestimmung der Programmnummer PRG erfolgt vorteilhafter Weise auf die oben unter Ausführungsform 1 beschriebene Weise.

Die vorhergehende Beschreibung der Ausführungsbeispiele gemäss der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen. So kann beispielsweise bei der oben beschriebenen Ausführungsform 2 der in Figur 1 gezeigte Positionssensor 7 auch weggelassen werden. Zudem müssen die Verfahrensschritte 20 - 30 nicht in der in Figur 3 gezeigten Reihenfolge durchgeführt werden. So kann beispielsweise die Erfassung der Breite und der Tiefe zeitgleich durchgeführt werden.

Die einzelnen Komponenten beziehungsweise Verfahrensschritte der oben beschriebenen Ausführungsformen können auch auf eine andere als in den Ausführungsformen 1 bis 3 beschriebene Weise miteinander kombiniert werden.

Als Werkstücke eignen sich insbesondere längliche Profile mit im Wesentlichen über die Länge gleichbleibendem Querschnitt, wie zum Beispiel Konstruktionsprofile für Wintergärten.

**Bezugszeichenliste**

1          Beschichtungsanlage

| 2 | Transporteinrichtung |
|---|---|
| 3 | Sensor |
| 4 | Halterung |
| 5 | Sensor |
| 6 | Halterung |
| 7 | Sensor zur Positionserfassung |
| 8 | Pulversprühpistole |
| 9 | Pulversprühpistole |
| 10 | Auswerteeinheit |
| 11 | Programmauswahleinheit |
| 12 | Einheit zur Ermittlung der Parameter |
| 13 | Steuergerät für die Pistole 9 |
| 14 | Steuergerät für die Pistole 8 |
| 15 | Linearhubgerät |
| 20 - 30 | Verfahrensschritte |
| 100 | Werkstück |
| 101 | Werkstück |
| 102 | Werkstück |
| 103 | Werkstück |
| 104 | Werkstück |
| 105 | Werkstück |
| 106 | Werkstück |
| 107 | Werkstück |
| d3 | Distanz zwischen Sensor 3 und Werkstück |
| d5 | Distanz zwischen Sensor 5 und Werkstück |
| K1 | Klasse für die Tiefe |
| K2 | Klasse für die Breite |
| Pos x | Position in x-Richtung |
| PRG P | Programmnummer P |
| P1 | Beschichtungsparameter 1 |
| Pn | Beschichtungsparameter n |
| s1 | Tiefe des Werkstücks |
| s2 | Breite des Werkstücks |
| s3 | Vertiefung im Werkstück |
| s4 | Breite der Vertiefung |
| s5 | Vertiefung im Werkstück |
| s6 | Breite der Vertiefung |
| T | Zeitraum |
| TR | Transportrichtung |

**Patentansprüche**

1. Verfahren zur Beschichtung eines Werkstücks mit Pulver mittels einer Pulversprühvorrichtung,

- bei dem die Tiefe (s1) des Werkstücks (100) erfasst wird,
- bei dem die Breite (s2) des Werkstücks (100) erfasst wird,
- bei dem eventuell vorhandene Vertiefungen (s3, s4) im Werkstück (100) erfasst werden,
- bei dem mittels einer Auswerte- und Steuereinheit (10 - 12) anhand der Tiefe (s1), der Breite (s2) und den Vertiefungen (s3, s4) Beschichtungsparameter (P1 - Pn) ermittelt werden, und
- bei dem die Pulversprühvorrichtung (8) mit den für das Werkstück (100) ermittelten Beschichtungsparametern (P1 - Pn) betrieben und das Werkstück (100) beschichtet wird.

2. Verfahren nach Patentanspruch 1,
bei dem Beschichtungsparameter die Hochspannung (P1) und/oder der Sprühstrom (P2) und/oder die Zerstäuberluft (P3) und/oder die Pulvermenge (P4) und/oder die Triggerung der Pulversprühvorrichtung (P5) und/oder die Förderluft (P6) und/oder die Dosierluft (P7) und/oder der Abstand (P8) zwischen dem Werkstück (100) und der Pulversprühvorrichtung (8) und/oder die vertikale Position (P9) der Pulversprühvorrichtung (8) und/oder ob das Werkstück vorbeschichtet ist und/oder ob es sich um die Sichtseite des Werkstücks handelt und/oder ob es sich um die Rückseite des Werkstücks handelt und/oder die Pulverart und/oder die Leitfähigkeit des Werkstücks und/oder die Transportgeschwindigkeit des Werkstücks sind.

3.  Verfahren nach Patentanspruch 1 oder 2,
    bei dem die erfasste Tiefe (s1) des Werkstücks (100) einer von mehreren Klassen (KT1) für die Tiefe zugeordnet wird.

4.  Verfahren nach einem der Patentansprüche 1 bis 3, bei dem die erfasste Breite (s2) des Werkstücks (100) einer von mehreren Klassen (KB1) für die Breite zugeordnet wird.

5.  Verfahren nach einem der Patentansprüche 1 bis 3, bei dem die Vertiefung (s3, s4) des Werkstücks (100) einer von mehreren Klassen (KV3) für die Vertiefung zugeordnet wird.

6.  Verfahren nach einem der Patentansprüche 1 bis 5, bei dem die Vertiefung aus dem Verhältnis von Vertiefungstiefe (s3) und Vertiefungsbreite (s4) gebildet wird.

7.  Verfahren nach einem der vorherigen Patentansprüche,
    bei dem mit Hilfe eines Inkrementalgebers die Breite des Werkstückes zu ermittelt wird.

8.  Verfahren nach Patentanspruch 7,
    bei dem anhand der vom Inkrementalgeber gelieferten Inkremente, die zwischen einem Start- und einem Endimpuls liegen, die Breite des Werkstücks ermittelt wird.

9.  Verfahren nach einem der Patentansprüche 3, 4 oder 5,
    bei dem aus der Klasse (KT1) für die Tiefe und/oder der Klasse (KB1) für die Breite und/oder der Klasse (KV3) für die Vertiefungen automatisch eine Programmnummer (PRG) aus einem Satz von Programmnummern ausgewählt wird, wobei mit jeder Programmnummer bestimmte Beschichtungsparameter (P1 - Pn) verknüpft sind.

10. Verfahren nach Patentanspruch 9,
    bei dem an Hand der Programmnummer (PRG) die Beschichtungsparameter (P1 - Pn) für die Pulversprühvorrichtung (8) bestimmt werden.

11. Verfahren nach einem der vorherigen Patentansprüche,
    bei dem die Vertiefungen (s3, s4) auf der Vorderseite und die Vertiefungen (s5, s6) auf der Rückseite des Werkstückes (100) erfasst werden.

12. Pulverbeschichtungsanlage, die mit dem Verfahren nach einem der vorherigen Patentansprüche 1 bis 11 betreibbar ist,

    - bei der eine Erfassungseinrichtung (3, 7) zur Erfassung der Tiefe (s1) und der Breite (s2) des Werkstücks (100) vorgesehen ist,
    - bei der eine Auswerteeinheit (10, 11) für die Bestimmung der Beschichtungsparameter (P1 - Pn) vorgesehen ist,
    - bei der eine Pulversprühvorrichtung (8) zur Beschichtung des Werkstücks (100) vorgesehen ist,
    - bei der eine Steuereinheit (12) vorgesehen ist, um die Pulversprühvorrichtung (8) mit den Beschichtungsparametern (P1 - Pn) zu betreiben.

13. Pulverbeschichtungsanlage nach Patentanspruch 12,

    - bei der eine Transporteinrichtung (2) für das Werkstück (100) vorgesehen ist,
    - bei der die Erfassungseinrichtung (3) für die Tiefe (s1) derart angeordnet und betreibbar ist, dass sie oben am Werkstück die Tiefe (s1) des Werkstücks (100) erfasst.

14. Pulverbeschichtungsanlage nach einem der Patentansprüche 12 oder 13,
    bei der die Erfassungseinrichtung einen Inkrementalgeber (7) aufweist, um die Breite (s2) und/oder die Position (Pos x) des Werkstückes (100) zu erfassen.

15. Pulverbeschichtungsanlage nach Patentanspruch 13 oder 14,
    bei der die Erfassungseinrichtung (3) für die Tiefe (s1) einen Abstandsmesssensor, einen Linienscanner, einen Drehstahlscanner oder eine Kamera aufweist.

**Claims**

1. A method for coating a workpiece with powder by means of a powder spray gun,

   - wherein the depth (s1) of the workpiece (100) is measured,
   - wherein the width (s2) of the workpiece (100) is measured,
   - wherein recesses (s3, s4), if any are possibly present in the workpiece (100), are measured,
   - wherein coating parameters (P1 - Pn) are determined by means of an evaluation and control unit (10 - 12) based on the depth (s1), the width (s2) and the recesses (s3, s4), and
   - wherein the powder spray gun (8) is operated with the coating parameters (P1 - Pn) determined for the workpiece (100) and the workpiece (100) is coated.

2. The method according to claim 1, wherein the coating parameters are the high voltage (P1) and/or the spray current (P2) and/or the atomized air (P3) and/or the amount of powder (P4) and/or the triggering of the powder spray gun (P5) and/or the conveying air (P6) and/or the dosing air (P7) and/or the distance (P8) between the workpiece (100) and the powder spray gun (8) and/or the vertical position (P9) of the powder spray gun (8) and/or whether the workpiece is precoated and/or whether the side in question is the visible side of the workpiece and/or whether the side in question is the rear side of the workpiece and/or the powder type and/or the conductivity of the workpiece and/or the transport speed of the workpiece.

3. The method according to claim 1 or 2, wherein the measured depth (s1) of the workpiece (100) is assigned to one out of a plurality of classes (KT1) for the depth.

4. The method according to any one of claims 1 to 3, wherein the measured width (s2) of the workpiece (100) is assigned to one out of a plurality of classes (KB1) for the width.

5. The method according to any one of claims 1 to 3, wherein the recess (s3, s4) of the workpiece (100) is assigned to one out of a plurality of classes (KV3) for the recess.

6. The method according to any one of claims 1 to 5, wherein the recess is determined based on the ratio of the recess depth (s3) to the recess width (s4).

7. The method according to any one of the preceding claims, wherein the width of the workpiece is determined by means of an incremental encoder.

8. The method according to claim 7, wherein the width of the workpiece is determined by means of the increments that are present between a start pulse and an end pulse and are supplied by the incremental encoder.

9. The method according to any one of claims 3, 4 or 5, wherein, from the class (KT1) for the depth and/or the class (KB1) for the width and/or the class (KV3) for the recesses, a program number (PRG) is automatically selected from a set of program numbers, wherein specific coating parameters (P1 - Pn) are linked with each program number.

10. The method according to claim 9, wherein the coating parameters (P1 - Pn) for the powder spray gun (8) are determined by means of the program number (PRG).

11. The method according to any one of the preceding claims, wherein the recesses (s3, s4) on the front side and the recesses (s5, s6) on the rear side of the workpiece (100) are measured.

12. A powder spray coating system which can be operated utilizing the method according to any one of the preceding claims 1 to 11,

- wherein a measuring device (3, 7) is provided for measuring the depth (s1) and the width (s2) of the workpiece (100),
- wherein an evaluation unit (10, 11) is provided for determining the coating parameters (P1 - Pn),
- wherein a powder spray gun (8) is provided for coating the workpiece (100),
- wherein a control unit (12) is provided for operating the powder spray gun (8) with the coating parameters (P1 - Pn).

**13.** The powder spray coating system according to claim 12,

- wherein a transporting device (2) is provided for the workpiece (100),
- wherein the measuring device (3) for the depth (s1) is arranged and operable in such a way that it measures the depth (s1) of the workpiece (100) at the top of the workpiece.

**14.** The powder spray coating system according to any one of claims 12 or 13, wherein the measuring device comprises an incremental encoder (7) in order to measure the width (s2) and/or the position (Pos x) of the workpiece (100).

**15.** The powder spray coating system according to claim 13 or 14, wherein the measuring device (3) for the depth (s1) comprises a distance measuring sensor, a line scanner, a turning steel scanner, or a camera.

## Revendications

**1.** Procédé destiné à revêtir une pièce avec de la poudre au moyen d'un dispositif de pulvérisation de poudre, dans lequel la profondeur (s1) de la pièce (100) est détectée,
dans lequel la largeur (s2) de la pièce (100) est détectée,
dans lequel des creux (s3, s4) éventuellement présents dans la pièce (100) sont détectés,
dans lequel des paramètres de revêtement (P1 - Pn) sont calculés au moyen d'une unité d'évaluation et de commande (10 - 12) à l'aide de la profondeur (s1), de la largeur (s2) et des creux (s3, s4), et
dans lequel le dispositif de pulvérisation de poudre (8) est utilisé avec les paramètres de revêtement (P1 - Pn) calculés pour la pièce (100) et la pièce (100) est revêtue.

**2.** Procédé selon la revendication 1,
dans lequel des paramètres de revêtement sont la haute tension (P1) et/ou le flux de pulvérisation (P2) et/ou l'air du pulvérisateur (P3) et/ou la quantité de poudre (P4) et/ou le déclenchement du dispositif de pulvérisation de poudre (P5) et/ou l'air de transport (P6) et/ou l'air de dosage (P7) et/ou l'écart (P8) entre la pièce (100) et le dispositif de pulvérisation de poudre (8) et/ou la position verticale (P9) du dispositif de pulvérisation de poudre (8) et/ou s'il s'agit de la face visible de la pièce et/ou s'il s'agit du dos de la pièce et/ou sont le type de poudre et/ou la conductibilité de la pièce et/ou la vitesse de transport de la pièce.

**3.** Procédé selon la revendication 1 ou 2,
dans lequel la profondeur (s1) détectée de la pièce (100) correspond à l'une d'une pluralité de classes (KT1) de profondeur.

**4.** Procédé selon l'une des revendications 1 à 3,
dans lequel la largeur détectée (s2) de la pièce (100) correspond à l'une d'une pluralité de classes (KB1) de largeur.

**5.** Procédé selon l'une des revendications 1 à 3,
dans lequel le creux (s3, s4) de la pièce (100) correspond à l'une d'une pluralité de classes (KV3) de creux.

**6.** Procédé selon l'une des revendications 1 à 5,
dans lequel le creux est formé à partir du rapport de la profondeur de creux (s3) et de la largeur de creux (s4).

**7.** Procédé selon l'une des revendications précédentes, dans lequel la largeur de la pièce est calculée à l'aide d'un codeur incrémental.

**8.** Procédé selon la revendication 7, dans lequel la largeur de la pièce est calculée à l'aide des incréments fournis par le codeur incrémental qui sont situés entre une impulsion de départ et une impulsion de fin.

**9.** Procédé selon l'une des revendications 3, 4 ou 5, dans lequel un numéro de programme (PRG) d'un jeu de numéros de programme est sélectionné automatiquement à partir de la classe (KT1) pour la profondeur et/ou la classe (KB1) pour la largeur et/ou la classe (KV3) pour les creux, sachant que des paramètres de revêtement (P1 - Pn) définis sont reliés à chaque numéro de programme.

**10.** Procédé selon la revendication 9, dans lequel les paramètres de revêtement (P1 - Pn) pour le dispositif de pulvérisation de poudre (8) sont déterminés à l'aide du numéro de programme (PRG).

**11.** Procédé selon l'une des revendications précédentes, dans lequel les creux (s3, s4) sont détectés sur la face avant et les creux (s5, s6) sont détectés sur le dos de la pièce (100).

**12.** Installation de revêtement par poudre qui peut être utilisée avec le procédé selon l'une des revendications précédentes 1 à 11,

- dans lequel un dispositif de détection (3, 7) est prévu pour détecter la profondeur (s1) et la largeur (s2) de la pièce (100),
- dans lequel une unité d'évaluation (10, 11) est prévue pour déterminer les paramètres de revêtement (P1 - Pn),
- dans lequel un dispositif de pulvérisation de poudre (8) est prévu pour revêtir la pièce (100),
- dans lequel une unité de commande (12) est prévue pour exploiter le dispositif de pulvérisation de poudre (8) avec les paramètres de revêtement (P1 - Pn).

**13.** Installation de revêtement par poudre selon la revendication 12,

- dans lequel un dispositif de transport (2) pour la pièce (100) est prévu,
- dans lequel le dispositif de détection (3) de la profondeur (s1) est ainsi agencé et peut être ainsi utilisé qu'il détecte la profondeur (s1) de la pièce (100) sur le dessus de la pièce.

**14.** Installation de revêtement par poudre selon l'une des revendications 12 ou 13, dans lequel le dispositif de détection présente un codeur incrémental (7) pour détecter la largeur (s2) et/ou la position (Pos x) de la pièce (100).

**15.** Installation de revêtement par poudre selon la revendication 13 ou 14, dans lequel le dispositif de détection (3) de la profondeur (s1) présente un capteur de mesure de distance, un scanner de lignes, un scanner de burin de tour ou une caméra.

Fig. 1

Fig. 2

Start

Initialisierung ⟋20

Tiefe
s1 erfassen ⟋21

Tiefe s1
einer der Klassen
KT1 ... KTn zuordnen ⟋22

Breite
s2 erfassen ⟋23

Breite s2
einer der Klassen
KB1 ... KBn zuordnen ⟋24

Vertiefung
s3 erfassen ⟋25

Vertiefung s3
einer der Klassen
KV1... KVn zuordnen ⟋26

Aus den zugeordneten
Klassen KTn, KBn und KVn
die Programmnummer PRG
bestimmen ⟋27

Aus der Programmnummer PRG
die Parameter P1 ... Pn ermitteln ⟋28

Hubgerät, Pumpe und
Spannungsversorgung entsprechend
den Parametern P1 ... Pn einstellen ⟋29

nächstes
Werkstück ⟋30

# Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69535077 T2